# EUROPÄISCHE PATENTSCHRIFT

(11) **EP 2 811 713 B1**
(45) Veröffentlichungstag und Bekanntmachung des Hinweises auf die Patenterteilung: **08.08.2018**
(21) Anmeldenummer: 14170938.6
(22) Anmeldetag: 03.06.2014
(51) Int. Cl.: H04L 29/06, H04W 12/06, H04L 29/08

(54) **Kommunikationssystem mit Zugangskontrolle, Verfahren zur Zugangsgewährung in einem Kommunikationssystem sowie damit ausgerüstetes Luftfahrzeug und/oder Wartungssystem**
Communication system with access control, method for granting access in a communication system and aircraft equipped therewith and/or maintenance system
Système de communication à contrôle d'accès, procédé d'autorisation d'accès dans un système de communication et aéronef et/ou système d'entretien en étant équipé

(30) Priorität: 04.06.2013 DE 102013105746
(43) Veröffentlichungstag der Anmeldung: 10.12.2014
(73) Patentinhaber: Airbus Defence and Space GmbH, 85521 Ottobrunn (DE)
(72) Erfinder: Kubisch, Martin, 80469 München (DE)
(74) Vertreter: Kastel, Stefan

(56) Entgegenhaltungen:
- EP-A1- 2 500 870
- DE-A1-102012 020 900
- US-A1- 2010 105 329
- US-A1- 2011 093 918

## Beschreibung

Die Erfindung betrifft ein Kommunikationssystem, aufweisend ein Netzwerk, an das Rechnersysteme anschließbar sind, mit einer ersten drahtlosen Kommunikationseinrichtung die ausgebildet ist, einen Kommunikationszugang zu dem Netzwerk für eine mobile Rechnereinrichtung bereitzustellen, wobei die erste Kommunikationseinrichtung eine Zugangskontrolleinrichtung zur Zugangsgewährung aufgrund einer der mobilen Rechnereinrichtung bekannten Authentifizierungsinformation und eine Authentifizierungsinformationserzeugungseinrichtung aufweist, die ausgebildet ist, eine für einen Zeitraum einer Wartung gültige temporäre Authentifizierungsinformation zu erzeugen, wobei das Kommunikationssystem dazu ausgebildet ist, die temporäre Authentifizierungsinformation als die Authentifizierungsinformation nur dann an die mobile Rechnereinrichtung zu übermitteln, wenn sich diese in einem gesicherten Bereich befindet, Darüber hinaus betrifft die Erfindung ein Verfahren zur Zugangsgewährung zu einem derartigen Kommunikationssystem. Die Erfindung betrifft auch ein Luftfahrzeug und/oder ein Wartungssystem mit einem Kommunikationssystem, das gemäß der oben genannten Art und/oder zur Durchführung des oben genannten Verfahrens ausgestaltet ist.

Ein eingangs beschriebenes Kommunikationssystem ist beispielsweise aus US 2011/0093918 A1 bekannt.

Externe Wartungsgeräte/Rechnereinrichtungen zur Wartung von mobilen und immobilen Instanzen müssen an das zu wartende System angeschlossen werden. Dabei soll sichergestellt werden, dass der Zugriff autorisiert ist. Herkömmlicherweise wird dies dadurch erreicht, dass der Anschluss an das zu wartende System in einem geschützten und zugriffsbeschränkten Bereich stattfindet (Keller, Cockpit). Die Verwendung von drahtloser Umgebungskommunikation (WLAN, ZigBee) vereinfacht zwar das Anschließen des externen Wartungsgeräts, hebt jedoch die inhärente Kombination von Anschlussort und Zugriffsbeschränkung auf.

Als Authentifizierungsverfahren von Geräten an einem drahtlosen Netzwerk sind beispielsweise WPA2 und der Radius-Standard (802.1X) bekannt. Die meisten Authentifizierungsverfahren beruhen darauf, dass einer drahtlos kommunizierenden Rechnereinrichtung eine geheime Authentifizierungsinformation bekannt ist.

Die Erfindung beruht auf der Aufgabe, ein Kommunikationssystem der eingangs genannten Art derart weiterzubilden, dass eine Authentifizierungsinformation sicher von dem Kommunikationssystem an die Rechnereinrichtung übermittelt werden kann.

Die Aufgabe wird durch ein Kommunikationssystem gemäß Anspruch 1 sowie ein Verfahren gemäß dem Nebenanspruch gelöst.

Vorteilhafte Ausgestaltungen der Erfindung sind Gegenstand der Unteransprüche.

Erfindungsgemäß wird vorgeschlagen, dass die erste drahtlose Kommunikationseinrichtung einen ersten Kommunikationsbereich aufweist, der derart ausgebildet ist, dass die mobile Rechnereinrichtung mit der ersten Kommunikationseinrichtung kommunizieren kann, wenn die mobile Rechnereinrichtung in dem ersten Kommunikationsbereich angeordnet ist, wobei das Kommunikationssystem eine zweite drahtlose Kommunikationseinrichtung umfasst, die ausgebildet ist, die Authentifizierungsinformation für die mobile Rechnereinrichtung bereitzustellen, wobei die zweite Kommunikationseinrichtung außerhalb des ersten Kommunikationsbereichs angeordnet ist und einen zweiten Kommunikationsbereich aufweist, der derart ausgebildet ist, dass die mobile Rechnereinrichtung von der zweiten drahtlosen Kommunikationseinrichtung die Authentifizierungsinformation für den Zugang zu der ersten Kommunikationseinrichtung anfordern kann, wenn die mobile Rechnereinrichtung in dem zweiten Kommunikationsbereich angeordnet ist, wobei der zweite Kommunikationsbereich in einem gesicherten Bereich angeordnet ist und kleiner ausgebildet ist als der erste Kommunikationsbereich.

Gemäß einem ersten Aspekt schafft die Erfindung ein Kommunikationssystem, aufweisend ein Netzwerk, an das Rechnersysteme anschließbar sind, eine erste Kommunikationseinrichtung, die ausgebildet ist, einen Kommunikationszugang zu dem Netzwerk für eine mobile Rechnereinrichtung bereitzustellen, wobei die erste Kommunikationseinrichtung eine Zugangskontrolleinrichtung zur Zugangsgewährung aufgrund einer der mobilen Rechnereinrichtung bekannten Authentifizierungsinformation aufweist, wobei die erste Kommunikationseinrichtung eine drahtlose Kommunikationseinrichtung ist, die einen ersten Kommunikationsbereich aufweist, der derart ausgebildet ist, dass die mobile Rechnereinrichtung mit der ersten Kommunikationseinrichtung kommunizieren kann, wenn die mobile Rechnereinrichtung in dem ersten Kommunikationsbereich angeordnet ist, wobei das Kommunikationssystem eine zweite drahtlose Kommunikationseinrichtung umfasst, die ausgebildet ist, die Authentifizierungsinformation für die mobile Rechnereinrichtung bereitzustellen, wobei die zweite Kommunikationseinrichtung außerhalb des ersten Kommunikationsbereichs angeordnet ist und einen zweiten Kommunikationsbereich aufweist, der derart ausgebildet ist, dass die mobile Rechnereinrichtung von der zweiten drahtlosen Kommunikationseinrichtung die Authentifizierungsinformation für den Zugang zu der ersten Kommunikationseinrichtung anfordern kann, wenn die mobile Rechnereinrichtung in dem zweiten Kommunikationsbereich angeordnet ist, wobei der zweite Kommunikationsbereich in einem gesicherten Bereich angeordnet ist und kleiner ausgebildet ist als der erste Kommunikationsbereich.

Ein derartiges Kommunikationssystem erlaubt es, die zweite Kommunikationseinrichtung in einem geschützten Bereich anzuordnen, so dass nur Rechnereinrichtungen die Authentifizierungsinformation erhalten, die Zugang zu diesem geschützten Bereich haben. Auf Seiten eines Bedieners der mobilen Rechnereinrichtung ist keine Eingabe von Authentifizierungsinformationen an der mobilen Rechnereinrichtung notwendig, wodurch Bedienerfehler reduziert werden. Durch einen Authentifizierungsinformationsspeicher, der mittels des Netzwerks von der ersten und der zweiten Kommunikationseinrichtung auslesbar ist, kann die zweite Kommunikationseinrichtung aktuelle Authentifizierungsinformationen bereitstellen, die von der ersten Kommunikationseinrichtung beziehungsweise deren Zugangskontrolleinrichtung akzeptiert werden.

Die zweite Kommunikationseinrichtung ist eine drahtlose Kommunikationseinrichtung, wobei die zweite Kommunikationseinrichtung einen zweiten Kommunikationsbereich aufweist, der kleiner ist als der erste Kommunikationsbereich. Vorzugsweise ist eine Sendeleistung der zweiten Kommunikationseinrichtung gegenüber der Sendeleistung der ersten Kommunikationseinrichtung reduziert. Dadurch muss die mobile Rechnereinrichtung zum Empfang der Authentifizierungsinformationen in einem vergleichsweise eng begrenzten Bereich angeordnet sein.

Der zweite Kommunikationsbereich geht vorzugsweise nicht über einen zugangsgesicherten Raum hinaus. Somit ist die physische Anwesenheit der mobilen Rechnereinrichtung in dem Raum notwendig. Dadurch lässt sich einfach nachvollziehen, welche Rechnereinrichtungen die Zugangsberechtigung erhalten.

Das Kommunikationssystem kann eine Terminaleinrichtung zur Identifikation eines Bedieners aufweisen. Dadurch ist es möglich, eine Two-Factor-Authentifizierung durchzuführen, beispielsweise indem neben der Anwesenheit der mobilen Rechnereinrichtung eine PIN-Eingabe oder eine Identifikationskarte verlangt wird.

Gemäß einem weiteren Aspekt schafft die Erfindung ein Verfahren zur Zugangsgewährung zu einem zuvor beschriebenen Kommunikationssystemmit den Schritten:
Anordnen der mobilen Rechnereinrichtung in dem ersten Kommunikationsbereich und drahtloses Empfangen einer Authentifizierungsinformation von einer mobilen Rechnereinrichtung;
Prüfen der Authentifizierungsinformation;
Gewähren des Zugangs zu dem Kommunikationssystem, sofern die Authentifizierungsinformation korrekt ist;
Anordnen der mobilen Rechnereinrichtung in dem zweiten Kommunikationsbereich und drahtloses Anfordern der Authentifizierungsinformation von der zweiten Kommunikationseinrichtung durch die mobile Rechnereinrichtung;
drahtloses Übermitteln der Authentifizierungsinformation an die mobile Rechnereinrichtung mittels der zweiten Kommunikationseinrichtung;
Einstellen eines zweiten Kommunikationsbereichs der zweiten drahtlosen Kommunikationseinrichtung derart, dass der zweite Kommunikationsbereich kleiner ist als der erste Kommunikationsbereich.

Ein solches Verfahren weist den Schritt Übermitteln der Authentifizierungsinformationen mittels einer zweiten Kommunikationseinrichtung auf.

Es ist vorgesehen, dass ein zweiter Kommunikationsbereich der zweiten Kommunikationseinrichtung derart eingestellt wird, dass der zweite Kommunikationsbereich kleiner ist als der erste Kommunikationsbereich. Dadurch wird die Möglichkeit des Erhalts der Authentifizierungsinformationen auf einen physisch begrenzten Bereich beschränkt.

Darüber hinaus kann vorgesehen sein, dass die Authentifizierungsinformation erst nach dem Nachweis einer Zugangsberechtigung mittels einer Terminaleinrichtung übermittelt wird. Die Zugangsberechtigung kann durch Eingabe eines persönlichen Identifikationscodes an der Terminaleinrichtung und/oder durch Einlesen von Daten einer Identifikationskarte durch die Terminaleinrichtung nachgewiesen werden. Durch eine derartige Two-Factor-Authentifizierung wird die Sicherheit des Kommunikationssystems erhöht.

Die Aufgabe wird ebenfalls durch ein Luftfahrzeug mit einem derartigen Kommunikationssystem sowie mit einem zur Durchführung des oben genannten Verfahrens geeigneten Kommunikationssystem gelöst.

Die Erfindung wird nachfolgend anhand von Ausführungsbeispielen näher erläutert, die in den beigefügten Figuren schematisch dargestellt sind. Im Einzelnen zeigen:
- Fig. 1: eine Übersicht über eine erste Ausführungsform der vorliegenden Erfindung;
- Fig. 2: eine Übersicht über eine zweite Ausführungsform der vorliegenden Erfindung und
- Fig. 3: die Anordnung von Komponenten der zweiten Ausführungsform.

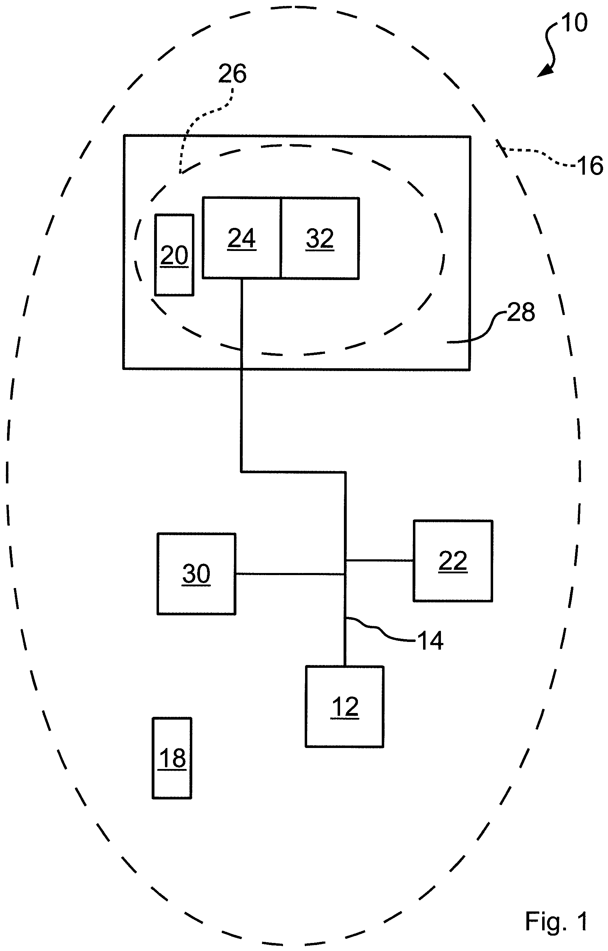

Fig. 1 zeigt ein Kommunikationssystem 10 mit einer ersten Kommunikationseinrichtung 12. Die erste Kommunikationseinrichtung 12 stellt einen drahtlosen Kommunikationszugang zu einem Netzwerk 14 bereit. An das Netzwerk 14 sind verschiedene Rechnersysteme anschließbar, die unterschiedliche Funktionen erfüllen können.

Die erste Kommunikationseinrichtung 12, die als WLAN-Accesspoint ausgebildet ist, weist einen ersten Kommunikationsbereich 16 auf, in dem mobile Rechnereinrichtungen 18, 20 mit ihr kommunizieren können. Der erste Kommunikationsbereich 16 ist in dem vorliegenden Fall durch die Sende- und Empfangsleistung der ersten Kommunikationseinrichtung 12 sowie der mobilen Rechnereinrichtungen 18, 20 begrenzt.

Die erste Kommunikationseinrichtung 12 weist eine Zugangskontrolleinrichtung (nicht gezeigt) auf, die darüber entscheidet, ob eine mobile Rechnereinrichtung 18, 20 Zugang zu der ersten Kommunikationseinrichtung 12 erhält. Eine derartige Zugangskontrolleinrichtung kann auf verschiedene Arten implementiert werden. In dem vorliegenden Fall muss der mobilen Rechnereinrichtung 18, 20 eine Authentifizierungsinformation bekannt sein, die zur Verschlüsselung einer Datenübertragung zwischen der mobilen Rechnereinrichtung 18, 20 und der ersten Kommunikationseinrichtung 12 dient. In dem Kontext einer WPA2-Verschlüsselung ist diese Authentifizierungsinformation ein Zertifikat oder ein Passwort.

Sofern der mobilen Rechnereinrichtung 18, 20 das Zertifikat oder das Passwort nicht bekannt sind, kann diese keine korrekt verschlüsselten Daten an die erste Kommunikationseinrichtung 12 versenden oder von ihr empfangen. Dadurch wird effektiv der Zugang zu der ersten Kommunikationseinrichtung 12 verweigert.

Es existiert eine Vielzahl von weiteren Verfahren zur Authentifizierung, die jeweils darauf beruhen, dass der mobilen Rechnereinrichtung 18, 20, wenn sie zum Zugriff berechtigt ist, eine Authentifizierungsinformation bekannt ist.

Das Kommunikationssystem 10 weist einen Authentifizierungsinformationsspeicher 22 zur Aufnahme gültiger Authentifizierungsinformationen auf. Mittels des Netzwerks 14 können angeschlossene Kommunikationseinrichtungen 12 auf den Authentifizierungsinformationsspeicher 22 zugreifen und dadurch ermitteln, welche Authentifizierungsinformationen gültig sind.

In bestimmten Situationen soll einer mobilen Rechnereinrichtung 18, 20 nicht permanent Zugriff auf die erste Kommunikationseinrichtung 12 gewährt werden. Dies ist beispielsweise bei Wartungssystemen der Fall, bei denen mobilen Diagnosegeräten nur für den Zeitraum der Wartung Zugriff gewährt werden soll, da sie zur Wartung unterschiedlicher Systeme verwendbar sein sollen. Für einen derartigen Wartungszeitraum wird eine temporäre Authentifizierungsinformation erzeugt, die der mobilen Rechnereinrichtung 18, 20 übermittelt wird. Zur Erzeugung dieser temporären Authentifizierungsinformation weist das Kommunikationssystem 10 eine Authentifizierungsinformationserzeugungseinrichtung 30 auf. Die Authentifizierungsinformationserzeugungseinrichtung 30 erzeugt Authentifizierungsinformationen, die beispielsweise in dem Authentifizierungsinformationsspeicher 22 abgelegt werden.

Zum Zweck der Übermittlung der temporären Authentifizierungsinformation weist das Kommunikationssystem 10 eine zweite Kommunikationseinrichtung 24 mit einem zweiten Kommunikationsbereich 26 auf. Sofern sich die mobile Rechnereinrichtung 18, 20 in dem zweiten Kommunikationsbereich 26 befindet, kann sie von der zweiten Kommunikationseinrichtung 24 die Authentifizierungsinformation für den Zugang zu der ersten Kommunikationseinrichtung 12 anfordern.

Damit diese temporäre Authentifizierungsinformation nur an mobile Rechnereinrichtungen 18, 20 übermittelt wird, die tatsächlich an einer Wartung beteiligt sind, ist der zweite Kommunikationsbereich 26 kleiner als der erste Kommunikationsbereich 16 und in einem gesicherten Bereich 28 angeordnet, der nur für berechtigte Personen, insbesondere für Wartungspersonal, zugänglich ist. In einem Luftfahrzeug wäre ein geeigneter Bereich 28 das Cockpit.

Da sich die mobile Rechnereinrichtung 20 in dem gesicherten Bereich 28 und auch in dem zweiten Kommunikationsbereich 26 befindet, wird also angenommen, dass der Rechnereinrichtung 20 auch Zugriff auf die erste Kommunikationseinrichtung 12 gewährt werden soll. Die mobile Rechnereinrichtung 18, die sich nicht in dem zweiten Kommunikationsbereich 26 befindet, kann die Authentifizierungsinformationen nicht anfordern, da sie Nachrichten von der zweiten Kommunikationseinrichtung 24 nicht empfangen kann.

Zusätzlich zu der Notwendigkeit, Zugang zu dem gesicherten Bereich 28 zu haben ist die Freigabe der Authentifizierungsinformation an eine Freischaltung durch eine Terminaleinrichtung 32 gekoppelt. Die Terminaleinrichtung 32 erwartet eine zusätzliche Identifikation, beispielsweise einen Pincode oder eine Mitarbeiter-Identifikationskarte. Zu diesem Zweck kann die Terminaleinrichtung 32 eine Tastatur und/oder einen Kartenleser aufweisen. Erst wenn diese zusätzliche Identifikation erfolgreich abgeschlossen ist, wird der mobilen Rechnereinrichtung 20 die Authentifizierungsinformation übermittelt.

Die Freigabe der Authentifizierungsinformation durch die Terminaleinrichtung 32 ist allerdings optional, so dass die Terminaleinrichtung 32 nicht unbedingt notwendig ist.

Drahtlose Systeme finden in der Luft- und Raumfahrt Anwendung, sind jedoch aufgrund der Sicherheitsanforderungen (Schutz vor unerlaubtem Eingriff) meistens lediglich als lesender Zugriff auf Messsysteme (Tyre pressure, High lift torque limiter) umgesetzt. In der Gebäudetechnik werden solche Systeme ebenfalls als Nur-Lesesysteme verwendet, beispielsweise zum Ablesen von Strom- und Heizunswerten.

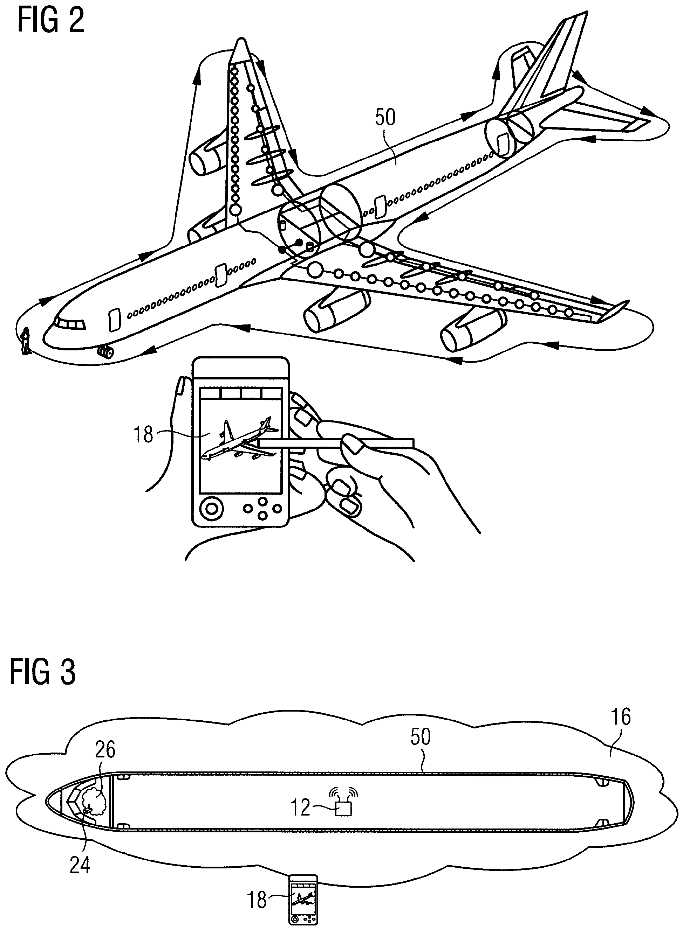

Die Wartung und Instandhaltung von mobilen und immobilen Instanzen (z.B. Flugzeug, Auto, Zug, Häusern) können durch den Einsatz von drahtlosen Geräten vereinfacht werden. Fig. 2 stellt dies für die Wartung eines Flugzeugs 50 dar. Das Flugzeug 50 ist mit einer ersten Kommunikationseinrichtung in Form eines drahtlosen Anschlusspunkts 12 ausgestattet und ein Wartungsmechaniker kann mit Hilfe eines drahtlosen Geräts in Form einer mobilen Rechnereinrichtung 18 Statusabfragen oder Wartungsfunktionen von einer beliebigen Position aus - am oder im Flugzeug 50 - ausführen.

Er ist somit nicht mehr darauf angewiesen, den Status direkt an der Quelle abzulesen (z.B. Getriebe im Flügel) oder sich mit zusätzlichem Personal im Cockpit abzustimmen um Getriebe an- oder abzuschalten. Fig. 2 stellt den Zugriff eines drahtlosen Geräts 18 an den drahtlosen Anschlusspunkt 12 des Flugzeugs 50 z.B. per IEEE802.11 dar.

Herkömmlicherweise wird die exklusive und gesicherte Nutzung von Statusabfragen und Wartungsfunktionen dadurch erreicht, dass der Anschluss an das zu wartende System drahtgebunden in einem geschützten und zugriffsbeschränkten Bereich des Wartungsobjekts stattfindet (Anschluss eines Steckers im Keller, unter der Motorhaube oder in der Fahrerkabine). Die Verwendung von drahtlosen Geräten 18 hebt jedoch die inhärente Kombination von Anschlussort und Zugriffsbeschränkung auf.

Die Verwendung von drahtlosen Geräten 18 erfordert deshalb, dass nur autorisierte drahtlose Geräte 18 sich mit dem drahtlosen Anschlusspunkt 12 verbinden dürfen um Zugriff auf die Statusinformationen und Wartungsfunktionen des Wartungsobjekts zu haben. Dies darf auch nur für eine begrenzte Dauer (Wartungssession) möglich sein.

Die vorliegende Erfindung beruht darauf, das Vorhandensein eines zugriffsbeschränkten Bereichs 28 zu nutzen, um drahtlose Geräte 18 dort an einer zweiten Kommunikationseinrichtung in Form eines Autorisierungspunkts 24 mit drahtloser Nahfeldkommunikation zu autorisieren (z.B. NFC, RFID, Infrarot) und ihnen den Zugriff auf den drahtlosen Anschlusspunkt 12 für eine Wartungssession zu geben.

In einem Flugzeug kann der zugriffsbeschränkte Bereich z.B. das Cockpit 28 oder der Frachtraum sein. In Fig. 3 ist das Cockpit 28 als zugriffsbeschränkter Bereich mit drahtlosem Autorisierungspunkt 24 dargestellt.

Die mobile Rechnereinrichtung 18 bildet ein externes Wartungsgerät, das wie auch das zu wartende System jeweils mit zwei Arten drahtloser Schnittstellen ausgestattet ist. Eine Schnittstelle für das Nahfeld (zum Beispiel NFC, RFID) und eine (oder mehrere) drahtlose Schnittstellen für die drahtlose Umgebungskommunikation (zum Beispiel WLAN). Die Nahfeldschnittstelle befindet sich nur in einem geschützten und zugriffsbeschränkten Bereich 28 (Cockpit, abgeschlossener Kellerraum, Auto Innenraum). Über die Nahfeldschnittstelle wird erst der Sitzungsschlüssel ("Session Key") übertragen, der es dem externen Wartungsgerät 18 dann ermöglicht, über die drahtlose Umgebungskommunikation mit dem Wartungssystem in Kontakt zu treten.

Bevor das drahtlose Gerät 18 eine Verbindung mit dem drahtlosen Anschlusspunkt 12 herstellen kann, muss es über den Autorisierungspunkt 24 im zugriffsbeschränkten Bereich 28 den Schlüssel für die Wartungssession erfahren. Nach Ablauf der Wartungssession erklärt der drahtlose Anschlusspunkt 12 den Schlüssel für ungültig und beendet die Verbindung mit dem drahtlosen Gerät 18. Erst nach einer erneuten Autorisierung und Erhalt eines neuen Schlüssels, kann das drahtlose Gerät 18 wieder auf die Steuerdaten und Wartungsfunktionen des Wartungsobjekts zugreifen.

Die Vorteile der vorliegenden Erfindung umfassen, dass das externe Wartungsgerät 18 nicht mehr ortsgebunden ist. Dadurch kann ein Servicetechniker Aktionen ausführen (beispielsweise eine Heizungspumpe starten) und gleichzeitig den Effekt an der weit entfernten Heizung beobachten.

Darüber hinaus ist keine aufwändige Konfiguration der Zugriffsberechtigungen der Umgebungskommunikation mehr notwendig.

Über die Nahfeldschnittstelle kann die Systemsicherheit durch ein Softwareupdate des externen Wartungsgeräts 18 wiederhergestellt werden.

In dem geschützten Bereich kann eine zusätzliche Sicherheitsvorrichtung, beispielsweise in Form einer Terminaleinrichtung 32, beispielsweise in Form eines Eingabegerätes für einen PIN-Code oder eines Kartenlesers für eine Firmen-ID vorgesehen sein.

Der zweite Kommunikationsbereich 26 kann dadurch verkleinert werden, dass eine Sendeleistung der zweiten Kommunikationseinrichtung reduziert wird. Darüber hinaus ist es möglich, den zweiten Kommunikationsbereich 26 dadurch zu verändern, dass eine Antenne der zweiten Kommunikationseinrichtung 24 eine besondere Form aufweist oder dass Abschirmungseinrichtungen vorgesehen sind, die einen Sende- und/oder Empfangsbereich der zweiten Kommunikationseinrichtung 24 beschränken.

Die erste Kommunikationseinrichtung 12 kann nicht nur auf IEEE802.11 (WLAN), sondern auf einem beliebigen Funkstandard basieren (beispielsweise ZigBee oder Bluetooth).

Der Authentifizierungsinformationsspeicher 22 sowie die Authentifizierungsinformationserzeugungseinrichtung 30 sind als separate, mittels des Netzwerks 24 mit den Kommunikationseinrichtungen 12, 24 verbundene Einrichtungen gezeigt. Dies hat den Vorteil, dass die Kommunikationseinrichtungen 12, 24 trotz separater Ausgestaltung immer dieselben aktuellen Authentifizierungsinformationen nutzen können. Es ist genauso möglich, den Authentifizierungsinformationsspeicher 22 und/oder die Authentifizierungsinformationserzeugungseinrichtung 30 als eine gemeinsame Einrichtung vorzusehen. Darüber hinaus können der Authentifizierungsinformationsspeicher 22 und/oder die Authentifizierungsinformationserzeugungseinrichtung 30 in eine der Kommunikationseinrichtungen 12,24 integriert sein.

Die Kommunikationseinrichtungen 12,24 sind in dem vorliegenden Ausführungsbeispiel separat ausgebildet, können jedoch in eine einzelne Kommunikationseinrichtung integriert sein.

Die zweite Kommunikationseinrichtung 24 kann außerhalb des ersten Kommunikationsbereichs 16 angeordnet sein.

Der Authentifizierungsinformationsspeicher 22 kann es vorsehen, dass Authentifizierungsinformationen nach Verstreichen einer bestimmten Zeit ungültig oder gelöscht werden. Darüber hinaus kann der Authentifizierungsinformationsspeicher 22 es vorsehen, dass temporäre, für eine Wartung erzeugte Authentifizierungsinformationen am Ende einer Wartung auf Befehl gelöscht werden können.

Die vorliegende Erfindung erlaubt es auf einfache Weise, eine Zugangskontrolle zu einem drahtlosen Netzwerk bereitzustellen, die einfach bedienbar und trotzdem zuverlässig ist.

### Bezugszeichenliste

- 10: Kommunikationssystem
- 12: Erste Kommunikationseinrichtung
- 14: Netzwerk
- 16: Erster Kommunikationsbereich
- 18: Mobile Rechnereinrichtung
- 20: Mobile Rechnereinrichtung
- 22: Authentifizierungsinformationsspeicher
- 24: Zweite Kommunikationseinrichtung
- 26: Zweite Kommunikationsbereich
- 28: Gesicherter Bereich
- 30: Authentifizierungsinformationserzeugungseinrichtung
- 32: Terminaleinrichtung
- 50: Flugzeug

## Patentansprüche

1. Kommunikationssystem (10), aufweisend
ein Netzwerk (14), an das Rechnersysteme anschließbar sind, eine erste Kommunikationseinrichtung (12), die ausgebildet ist, einen Kommunikationszugang zu dem Netzwerk (14) für eine mobile Rechnereinrichtung (18, 20) bereitzustellen, wobei die erste Kommunikationseinrichtung (12) eine Zugangskontrolleinrichtung zur Zugangsgewährung aufgrund einer der mobilen Rechnereinrichtung (18, 20) bekannten Authentifizierungsinformation aufweist, und
eine Authentifizierungsinformationserzeugungseinrichtung (30), die ausgebildet ist, eine für einen Zeitraum einer Wartung gültige temporäre Authentifizierungsinformation zu erzeugen, wobei das Kommunikationssystem (10) dazu ausgebildet ist, die temporäre Authentifizierungsinformation als die Authentifizierungsinformation nur dann an die mobile Rechnereinrichtung (18, 20) zu übermitteln, wenn sich diese in einem gesicherten Bereich (28) befindet,
**dadurch gekennzeichnet, dass**
die erste Kommunikationseinrichtung (12) eine drahtlose Kommunikationseinrichtung ist, die einen ersten Kommunikationsbereich (16) aufweist, der derart ausgebildet ist, dass die mobile Rechnereinrichtung (18, 20) mit der ersten Kommunikationseinrichtung (12) kommunizieren kann, wenn die mobile Rechnereinrichtung (18, 20) in dem ersten Kommunikationsbereich (16) angeordnet ist, wobei das Kommunikationssystem (10) eine zweite drahtlose Kommunikationseinrichtung (24) umfasst, die ausgebildet ist, die Authentifizierungsinformation für die mobile Rechnereinrichtung (18, 20) bereitzustellen, wobei die zweite Kommunikationseinrichtung (24) außerhalb des ersten Kommunikationsbereichs (16) angeordnet ist und einen zweiten Kommunikationsbereich (26) aufweist, der derart ausgebildet ist, dass die mobile Rechnereinrichtung (18, 20) von der zweiten drahtlosen Kommunikationseinrichtung (24) die Authentifizierungsinformation für den Zugang zu der ersten Kommunikationseinrichtung (12) anfordern kann, wenn die mobile Rechnereinrichtung (18, 20) in dem zweiten Kommunikationsbereich (26) angeordnet ist, wobei der zweite Kommunikationsbereich (26) in dem gesicherten Bereich (28) angeordnet ist und kleiner ausgebildet ist als der erste Kommunikationsbereich (16).

2. Kommunikationssystem nach Anspruch 1, **dadurch gekennzeichnet, dass** das Kommunikationssystem (10) einen Authentifizierungsinformationsspeicher (22) zur Aufnahme gültiger Authentifizierungsinformationen aufweist, der von der ersten und der zweiten Kommunikationseinrichtung (12, 24) auslesbar ist und wobei der Authentifizierungsinformationsspeicher (22) mittels des Netzwerks (14) mit den Kommunikationseinrichtungen (12, 24) verbunden ist.

3. Kommunikationssystem nach Anspruch 1 oder 2, **dadurch gekennzeichnet, dass** eine Sendeleistung der zweiten Kommunikationseinrichtung (24) gegenüber einer Sendeleistung der ersten Kommunikationseinrichtung (12) reduziert ist.

4. Kommunikationssystem nach einem der voranstehenden Ansprüche,
**dadurch gekennzeichnet, dass** der zweite Kommunikationsbereich (46) nicht über den gesicherten Bereich (28) hinausgeht.

5. Kommunikationssystem nach einem der voranstehenden Ansprüche,
**dadurch gekennzeichnet, dass** die zweite Kommunikationseinrichtung (24) eine Terminaleinrichtung (32) zur Identifikation eines Bedieners aufweist.

6. Kommunikationssystem nach einem der voranstehenden Ansprüche,
**dadurch gekennzeichnet, dass** eine Antenne der zweiten Kommunikationseinrichtung (24) Abschirmungseinrichtungen aufweist.

7. Verfahren zur Zugangsgewährung zu einem Kommunikationssystem (10) nach einem der vorhergehenden Ansprüche mit den Schritten:
Anordnen der mobilen Rechnereinrichtung (18, 20) in dem ersten Kommunikationsbereich (16) und drahtloses Empfangen einer Authentifizierungsinformation von der mobilen Rechnereinrichtung (18, 20);
Prüfen der Authentifizierungsinformation;
Gewähren des Zugangs zu dem Kommunikationssystem (10), sofern die Authentifizierungsinformation korrekt ist;
Anordnen der mobilen Rechnereinrichtung (18, 20) in dem zweiten Kommunikationsbereich (26) und drahtloses Anfordern der Authentifizierungsinformation von der zweiten drahtlosen Kommunikationseinrichtung (24) durch die mobile Rechnereinrichtung (18, 20),
drahtloses Übermitteln der Authentifizierungsinformation an die mobile Rechnereinrichtung (18, 20) mittels der zweiten drahtlosen Kommunikationseinrichtung (24), und
Einstellen eines zweiten Kommunikationsbereichs (26) der zweiten drahtlosen Kommunikationseinrichtung (24) derart, dass der zweite Kommunikationsbereich (26) kleiner ist als der erste Kommunikationsbereich (26).

8. Verfahren nach Anspruch 7, **gekennzeichnet durch den Schritt:**
Übermitteln der Authentifizierungsinformation, nachdem eine Zugangsberechtigung mittels einer Terminaleinrichtung (32) nachgewiesen wurde.

9. Verfahren nach Anspruch 8, **gekennzeichnet durch den Schritt:**
Nachweisen der Zugangsberechtigung durch Eingabe eines persönlichen Identifikationscodes an der Terminaleinrichtung (32).

10. Verfahren nach Anspruch 8, **gekennzeichnet durch den Schritt:**
Nachweisen der Zugangsberechtigung durch Einlesen von Daten einer Identifikationskarte durch die Terminaleinrichtung (32).

11. Luftfahrzeug mit einem Kommunikationssystem, das gemäß einem der Ansprüche 1 bis 6 und/oder zur Durchführung eines Verfahrens nach einem der Ansprüche 7 bis 10 ausgestaltet ist.

12. Wartungssystem mit einem Kommunikationssystem, das gemäß einem der Ansprüche 1 bis 6 und/oder zur Durchführung eines Verfahrens nach einem der Ansprüche 7 bis 10 ausgestaltet ist.

13. Luftfahrzeug mit einem Wartungssystem gemäß Anspruch 12.

## Claims

1. A communication system (10), comprising
a network (14) with which computer systems may be connected, a first wireless communication device (12) configured for providing communication access for a mobile computer device (18, 20), wherein the first wireless communication device (12) has an access control device for granting access based on authentication information known by the mobile computer device (18, 20), and
an authentication information generating device (30) configured to generate a temporary authentication information for maintenance time, wherein the communication system is configured to transmit the temporary authentication information as the authentication information only if the same is located in a secured area (28),
**characterized in that**
the first communication device (12) is a wireless communication device having a first communication area (16), the same configured such that the mobile computer device (18, 20) is able to communicate with the first communication device (12), if the mobile computer device (18, 20) is located within the first communication area (16), wherein the communication system (10) comprises a second wireless communication device (24) configured for providing the authentication information for the mobile computer device (18, 20), wherein the second communication device (24) is located outside the first communication area (16) and has a second communication area (26), which is configured such that the mobile computer device (18, 20) is able to request the authentication information from the second wireless communication device (24) for access to the first communication device (12), when the mobile computer device (18, 20) is located within the second communication area (26), wherein the second communication area (26) is located within the secured area (28) and is smaller than the first communication area (16).

2. The communication system according to claim 1, **characterized in that** the communication system (10) has an authentication information memory (22) for recording valid authentication information, which is readable by the first and the second communication device (12, 24), and the authentication information memory (22) is connected to the communication devices (12, 24) via the network (14).

3. The communication system according to claim 1 or 2, **characterized in that** a transmitting power of the second communication device (24) is reduced with respect to a transmitting power of the first communication device (12).

4. The communication system according to any of the preceding claims, **characterized in that** the second communication area (46) does not exceed the secured area (28).

5. The communication system according to any of the preceding claims, **characterized in that** the second communication device (24) has a terminal device (32) for the identification of a user.

6. The communication system according to any of the preceding claims **characterized in that** an antenna of the second communication device (24) comprises screening devices.

7. A method for granting access to a communication system (10) according to any of the preceding claims, comprising the steps of:
arranging a mobile computer device (18, 20) within the first communication area (16) and wirelessly receiving an authentication information from the mobile computer device (18, 20);
checking the authentication information;
granting access to the communication system (10), if the authentication information is correct;
arranging the mobile computer device (18, 20) within the second communication area (26) and wirelessly requesting of the authentication information from the second wireless communication device (24) by the mobile computer device (18, 20),
wirelessly transmitting the authentication information to the mobilde computer device (18, 20) by the second wireless communication device (24), and
setting a second communication area (26) of the second communication device (24) such that the second communication area (26) is smaller than the first communication area (16).

8. The method according to claim 7, **characterized by the step of:**
transmitting the authentication information, after an access authorisation via a terminal device (32) has been verified.

9. The method according to claim 8, **characterized by the step of:**
verifying access authorisation by entering a personal identification code into the terminal device (32).

10. The method according to claim 8, **characterized by the step of:**
verifying access authorisation by reading data from an identification card by the terminal device (32).

11. An aircraft having a communication system according to any of the claims 1 to 6 and/or configured for performing a method according to any of the claims 7 to 10.

12. A maintenance system having a communication system according to any of the claims 1 to 6 and/or configured for performing a method according to any of the claims 7 to 10.

13. An aircraft having a maintenance system according to claim 12.

## Revendications

1. Système de communication (10), comportant
un réseau (14) auquel des systèmes informatiques sont susceptibles d'être raccordés, un premier dispositif de communication (12) qui est réalisé pour fournir un accès de communication au réseau (14) pour un dispositif informatique mobile (18, 20), le premier dispositif de communication (12) comprenant un dispositif de contrôle d'accès pour l'autorisation à l'accès en raison d'une information d'authentification connue du dispositif informatique mobile (18, 20), et
un dispositif (30) générateur d'information d'authentification qui est réalisé pour générer une information d'authentification temporaire valable pour la période d'un entretien, le système de communication (10) étant réalisé pour ne transmettre l'information d'authentification temporaire au dispositif informatique mobile (18, 20) que lorsque celui-ci se trouve dans une zone sécurisée (28),
**caractérisé en ce que**
le premier dispositif de communication (12) est un dispositif de communication sans fil qui comprend une première zone de communication (16) qui est réalisée de telle sorte que le dispositif informatique mobile (18, 20) peut communiquer avec le premier dispositif de communication lorsque le dispositif informatique mobile (18, 20) est agencé dans la première zone de communication (16), le système de communication (10) comprenant un second dispositif de communication sans fil (24) qui est réalisé pour fournir l'information d'authentification pour le dispositif informatique mobile (18, 20), le second dispositif de communication (24) étant agencé à l'extérieur de la première zone de communication (16) et comprenant une seconde zone de communication (26) qui est réalisée de telle sorte que le dispositif informatique mobile (18, 20) peut requérir du second dispositif de communication sans fil (24) l'information d'authentification pour l'accès au premier dispositif de communication (12), lorsque le dispositif informatique mobile (18, 20) est agencé dans la seconde zone de communication (26), la seconde zone de communication (26) étant agencée dans la zone sécurisée (28) et étant réalisée plus petite que la première zone de communication (16).

2. Système de communication selon la revendication 1, **caractérisé en ce que** le système de communication (10) comprend une mémoire d'information d'authentification (22) pour recevoir des informations d'authentification valables, qui peut être lue par le premier et par le second dispositif de communication (12, 24), et la mémoire d'information d'authentification (22) est reliée aux dispositifs de communication (12, 24) au moyen du réseau (14).

3. Système de communication selon la revendication 1 ou 2, **caractérisé en ce que** la puissance d'émission du second dispositif de communication (24) est réduite par rapport à une puissance d'émission du premier dispositif de communication (12).

4. Système de communication selon l'une des revendications précédentes, **caractérisé en ce que** la seconde zone de communication (46) ne s'étend pas au-delà de la zone sécurisée (28).

5. Système de communication selon l'une des revendications précédentes, **caractérisé en ce que** le second dispositif de communication (24) comprend un dispositif terminal (32) pour l'identification d'un opérateur.

6. Système de communication selon l'une des revendications précédentes, **caractérisé en ce qu'**une antenne du second dispositif de communication (24) comprend des moyens de blindage.

7. Procédé pour permettre l'accès à un système de communication (10) selon l'une des revendications précédentes, comprenant les étapes consistant à :
agencer le dispositif informatique mobile (18, 20) dans la première zone de communication (16) et recevoir sans fil une information d'authentification depuis le dispositif informatique mobile (18, 20) ;
vérifier l'information d'authentification ;
permettre l'accès au système de communication (10) si l'information d'authentification est correcte ;
agencer le dispositif informatique mobile (18, 20) dans la seconde zone de communication (26) et requérir sans fil l'information d'authentification depuis le second dispositif de communication sans fil (24) par le dispositif informatique mobile (18, 20),
transmettre sans fil l'information d'authentification au dispositif informatique mobile (18, 20) au moyen du second dispositif de communication sans fil (24), et
adapter une seconde zone de communication (26) du second dispositif de communication sans fil (24) de telle sorte que la seconde zone de communication (26) est plus petite que la première zone de communication (16).

8. Procédé selon la revendication 7, **caractérisé par** l'étape consistant à :
transmettre l'information d'authentification après qu'une autorisation d'accès a été prouvée au moyen d'un dispositif terminal (32).

9. Procédé selon la revendication 8, **caractérisé par** l'étape consistant à :
prouver l'autorisation d'accès par entrée d'un code d'identification personnel sur le dispositif terminal (32).

10. Procédé selon la revendication 8, **caractérisé par** l'étape consistant à :
prouver l'autorisation d'accès par lecture de données d'une carte d'identification par le dispositif terminal (32).

11. Aéronef comportant un système de communication qui est réalisé selon l'une des revendications 1 à 6 et/ou pour mettre en oeuvre un procédé selon l'une des revendications 7 à 10.

12. Système d'entretien comportant un système de communication qui est réalisé selon l'une des revendications 1 à 6 et/ou pour mettre en oeuvre un procédé selon l'une des revendications 7 à 10.

13. Aéronef comportant un système d'entretien selon la revendication 12.
